# EUROPÄISCHE PATENTSCHRIFT

(11) **EP 1 959 698 B1**
(45) Veröffentlichungstag und Bekanntmachung des Hinweises auf die Patenterteilung: **02.10.2013**
(21) Anmeldenummer: 08101611.5
(22) Anmeldetag: 14.02.2008
(51) Int. Cl.: H04W 88/02

(54) **Kommunikationseinheit für ein Mobilfunknetz**
Communication unit for a mobile phone network
Unité de communication pour un réseau radio mobile

(30) Priorität: 15.02.2007 DE 102007008013
(43) Veröffentlichungstag der Anmeldung: 20.08.2008
(73) Patentinhaber: Vodafone Holding GmbH, 40213 Düsseldorf (DE)
(72) Erfinder: Lubjahn, Ralf, 40670 Meerbusch (DE)
(74) Vertreter: Vogel, Andreas

(56) Entgegenhaltungen:
- DE-U1- 29 900 610
- GB-A- 2 357 009
- US-A1- 2004 203 735
- US-A1- 2006 293 038

## Beschreibung

Die Erfindung betrifft eine Kommunikationseinheit für ein Mobilfunknetz, mit einem Identifizierungselement und einem Kommunikationselement, wobei das Identifizierungselement einen Angabensatz beinhaltet, der zur Identifizierung der Kommunikationseinheit in dem Mobilfunknetz dient, mittels des Kommunikationselementes eine Kommunikationsverbindung zwischen dem Mobilfunknetz und der Kommunikationseinheit aufbaubar ist und ein Aufbau der Kommunikationsverbindung über eine Einwahlinformation erfolgt.

Aus dem Stand der Technik sind Festnetztelefone als ein Kommunikationsmittel zur Übermittlung von Sprache bekannt. Solcherart Festnetztelefone sind aus dem heutigen Arbeitsleben nicht mehr wegzudenken. Gerade für Menschen, die an einem Telearbeitsplatz in ihrer Wohnung arbeiten, stellt das Festnetztelefon häufig die einzige Verbindung zu den Arbeitskollegen dar.

Als nachteilig hat es sich aber herausgestellt, dass das Verlegen eines Telefonkabels für das Festnetztelefon zu einer abgelegenen Wohnung häufig sehr umständlich ist. Aus diesem Grunde werden dabei im Höchstfall einfache Kupferleitungen verlegt und nicht etwa moderne Glasfaserkabel. Neben den Schwierigkeiten des Verlegens beeinflusst bzw. beschränkt somit die Art des verlegten Telefonkabels auch die Größe eines daran anschließbaren Telefonsystems. Die Art und der Ausbau des bei der Telearbeit genutzten Telefonsystemes ist somit abhängig von der Infrastruktur des Telefonkabels und damit vom Wohnort.

Weiterhin sind aus dem Stand der Technik Mobiltelefone bekannt, die es einem Benutzer ermöglichen, auch in abgelegenen Regionen zu telefonieren. Als nachteilig hat es sich aber erwiesen, dass an ein Mobiltelefon keine Telefonsysteme angeschlossen werden können. Vielmehr ist es nur möglich ein einzelnes Gespräch mit dem Mobiltelefon zu führen.

Aus der US 2004/0203735A ist ein Kommunikationsgerät bekannt, das eine Sende/Empfangseinheit mit einer Aufnahme für eine SIM-Karte zur Verwendung in einem Mobilfunknetz, eine Signalverarbeitungseinheit, die mit einer Vielzahl von Telefonleitungen und der Sende/Empfangseinheit verbunden ist und eine Energieversorgungseinheit aufweist. Das Kommunikationsgerät weist eine Vielzahl von Anschlüssen auf, die derart ausgestaltet sind, dass sie mit Telefonen, Computern und Faxgeräten verbindbar sind.

Die Aufgabe der Erfindung ist es, eine Kommunikationseinheit für ein Mobilfunknetz zu schaffen, welches die vorgenannten Nachteile vermeidet, insbesondere mit dem sich ein bestehendes Telefonsystem in ein Mobilfunknetz integrieren lässt.

Die Lösung der Aufgabe wird durch die erfindungsgemäße Kommunikationseinheit mit den Merkmalen des Anspruches 1 erreicht. In den abhängigen Ansprüchen 2 bis 11 sind bevorzugte Weiterbildungen der Erfindung aufgeführt.

Erfindungsgemäß ist es vorgesehen, dass die Kommunikationseinheit mit einer Telefoneinheit verbindbar ist, die Telefoneinheit die Kommunikationsverbindung der Kommunikationseinheit mit dem Mobilfunknetz nutzt, und zum Aufbau der Kommunikationsverbindung die Einwahlinformation mittels der Telefoneinheit an die Kommunikationseinheit übermittelbar ist.

Im Kern ersetzt somit die Kommunikationseinheit einen kabelgebundenen Telefonanschluss in der Wohnung eines Benutzers, wobei die mit dem Mobilfunknetz aufgebaute drahtlose Kommunikationsverbindung die kabelgebundene Verbindung ersetzt. Damit entfällt für einen Benutzer der Zwang seine Telefoneinheit an die existierende Infrastruktur des drahtgebundenen Telekommunikationsnetzes anzupassen. Weiterhin ermöglicht es die erfindungsgemäße Kommunikationseinheit schon bestehende Telefoneinheiten bzw. Telefonsysteme in ein Mobilfunknetz einzubinden.

In einer vorteilhaften Ausgestaltung handelt es sich bei der Telefoneinheit um einen analogen und/oder digitalen Telefonapparat, welcher über die Kommunikationseinheit mit dem Mobilfunknetz verbunden wird. Somit besteht die Möglichkeit schon seit langem genutzte Telefonapparate unabhängig von kabelgebundenen Telefonanschlüssen weiter zu verwenden. Folglich können insbesondere Telefoneinheiten, die für einen POTS (Plain old telephone service), einen PSTN (Public Switched Telephone Network), einen GSTN (General Switched Telephone Network) und/oder einen ISDN (Integrated Services Digital Network) Telekommunikationsstandard ausgelegt sind, an die Kommunikationseinheit angeschlossen werden. Gleiches gilt für Funktelefone, welche nach einem CT1 (Cordless Telephone), einem CT2 und/oder einem DECT (Digital Enhanced Cordless Telecommunications) Standard arbeiten. Darüber hinaus umfasst der Begriff Telefoneinheit im Sinne der Erfindung einen Router, also ein Gerät, welches zur Vermittlung und Verteilung von Datenpaketen in einem Rechnernetz dient. Solche Art Router werden als Verbindungsglied zu einem DSL (Digital Subscriber Line) Teilnehmeranschluss genutzt. Nunmehr kann der Router auch mit einer erfindungsgemäßen Kommunikationseinheit verbunden werden, um so einem Rechnernetz den Zugriff auf das Internet über die Kommunikationsverbindung zu ermöglichen.

Um eine große Anzahl heute existierender Telefoneinheiten an die Kommunikationseinheit anzuschließen, weist letztere in einer vorteilhaften Ausgestaltung einen Verbindungsanschluss auf. Mittels des Verbindungsanschlusses ist die Telefoneinheit mit der Kommunikationseinheit verbindbar. Dabei ist der Verbindungsanschluss vorteilhafterweise nach einer TAE (Telekommunikations-Anschluss-Einheit), einer TDO (Telefonsteckdose in Österreich) und/oder einer RJ-XX (Registered Jack) Anschlussnorm ausgelegt. Denn durch einen derart gestalteten Verbindungsanschluss ist ein weltweiter Einsatz der Kommunikationseinheit möglich.

Insbesondere auf Reisen oder im Urlaub kann ein Benutzer die Kommunikationseinheit mit jenen Telefoneinheiten verbinden, die z.B. in dem Hotelzimmer stehen. Dadurch ist der Reisende immer unter seiner bekannten Einwahlinformation zu erreichen.

Nach dem Verbinden der Kommunikationseinheit mit der Telefoneinheit über den Verbindungsanschluss entsteht eine Datentransferanbindung zwischen den beiden Einheiten. Über diese Datentransferanbindung ist ein einseitiger oder wechselseitiger Austausch von digitalen und/oder analogen Daten möglich, welche danach im Kommunikationsnetz und/oder der Telefoneinheit und/oder Kommunikationseinheit in Sprache, Text, Graphiken oder Bilder umgesetzt werden. Dabei entscheidet die Art der Telefoneinheit bzw. der Kommunikationseinheit über die Umsetzung der empfangenen bzw. gesendeten Daten.

Um die Art und/oder die Anzahl der mit der Kommunikationseinheit verbundenen Telefoneinheiten zu detektieren, kann die Kommunikationseinheit in einer vorteilhaften Ausgestaltung eine Rechnereinheit aufweisen. Erfindungsgemäß detektiert die Rechnereinheit ein Ankoppeln der Telefoneinheit an den Verbindungsanschluss. Nach einem Abgleich mit den in der Rechnereinheit gespeicherten Informationen kann die Kommunikationseinheit den Verbindungsanschluss an die Telefoneinheit anpassen. Dieses hat den Vorteil, dass auch Telefoneinheiten verschiedener Telekommunikationsstandards fehlerfrei arbeiten, welche zum Teil unterschiedliche Strömen und/oder Spannungen bedürfen. Des Weiteren funktioniert ein Datenaustausch zwischen der Kommunikationseinheit und der Telefoneinheit häufig nur auf Basis komplexer Protokolle, die ebenfalls in der Rechnereinheit gespeichert sind. Somit sind alle zur Anpassung benötigten Informationen in der Rechnereinheit hinterlegt und können zusätzlich mittels der Kommunikationsverbindung automatisch aktualisiert werden. Dazu kann beispielsweise von dem Betreiber des Mobilfunknetzes in festgelegten zeitlichen Abständen eine Mitteilung an die Kommunikationseinheit gesandt werden, welche aktuelle Informationen für die Rechnereinheit beinhaltet.

In einer weiteren Ausgestaltung kann die Telefoneinheit ein Teil eines Telefonsystems sein, welches mit der Kommunikationseinheit über den Verbindungsanschluss verbindbar ist. Bei dem Telefonsystem kann es sich um eine Mehrzahl von Telefoneinheiten handeln, die über eine Kommunikationseinheit mit dem Mobilfunknetz verbunden sind. Dabei kann die Kommunikationseinheit durch eine digitale Übertragung über einen Anschluss mehrere Kanäle gleichzeitig übermitteln, so dass die Kanäle unabhängig voneinander für ein Telefongespräch, ein Fax oder eine sonstige Datenübertragung genutzt werden können. Um dieses zu ermöglichen, kann die Kommunikationseinheit eine Stammnummer und mehrere Teilnehmernummern verwalten, welche sich jeweils auf die angeschlossenen Telefoneinheiten in dem Telefonsystem beziehen. Des Weiteren kann das Telefonsystem auch Fernseh-, Radio-, Mail- oder Internetanschlüsse aufweisen, da mittels der Kommunikationsverbindung beliebige Daten an die Kommunikationseinheit bzw. die Elemente des Telefonsystems übermittelt werden können. Darüber hinaus kann in einer vorteilhaften Ausgestaltung an die Kommunikationseinheit ein Faxgerät anschließbar sein und mittels der Kommunikationseinheit eine Faxnachricht empfangbar bzw. versendbar sein. Insbesondere erkennt die Kommunikationseinheit Faxgeräte, welche nach einem G3 oder G4 Standard arbeiten und ermöglicht diesen eine problemlose Kommunikation mit dem Mobilfunknetz.

Bei einer weiteren Ausgestaltung der Kommunikationseinheit ist es vorgesehen, dass das Telefonsystem einen Computer und die Rechnereinheit ein Computer-Programm aufweist. Dabei installiert das Computer-Programm einen Verbindungsdatensatz auf dem Computer, um eine Verbindung des Computers mit dem Internet sicherzustellen. Das Computer-Programm ermöglicht folglich den Zugang des Computers in das Mobilfunknetz. Damit bei einer Umstellung eines bestehenden Telefonsystems von einem kabelgebundenen Telefonanschluss auf die erfindungsgemäße Kommunikationseinheit keine Verzögerungen durch die Installation neuer Software für den Verbindungsaufbau des Computers entstehen, weist die erfindungsgemäße Kommunikationseinheit das Computer-Programm auf. Dieses installiert sich selbständig auf dem Computer und beinhaltet sämtliche für den Verbindungsaufbau nötigen Angaben. Bei den Angaben kann es sich vorzugsweise um einen Treiber für ein Modem, Telefonnummern für den Internetzugang des Mobilfunknetzbetreibers, vordefinierte Benutzernamen und/oder Passwörter handeln. Durch die Kombination der erfindungsgemäßen Kommunikationseinheit mit dem Computer-Programm, erlangt ein Computer unmittelbaren Zugriff auf das Internet, ohne dass es umfangreicher Installationen von Zugangssoftware bedarf.

Um die erfindungsgemäße Kommunikationseinheit autark, dass heißt unabhängig von einer externen Spannungsversorgung bzw. Energiequelle zu betreiben, kann wenigstens eine Batterie oder ein Akku als Spannungsversorgung für die elektrischen Elemente vorgesehen sein. Damit ein Wechsel der Batterie oder des Akkus möglich ist, kann in der Kommunikationseinheit eine verschließbare Öffnung vorgesehen sein, unter der sich die Batterie oder der Akku verbergen. Des Weiteren kann die Kommunikationseinheit ein Leuchtmittel aufweisen, wobei das Leuchtmittel insbesondere eine LED (Light Emitting Diode) oder eine OLED (Organic Light Emitting Diode) ist. Das Leuchtmittel kann dazu dienen anzuzeigen, ob die Kommunikationseinheit betriebsbereit, in Betrieb, beim Empfangen oder beim Senden von Daten ist. Des Weiteren lassen sich unterschiedlich farbige Leuchtmittel einsetzen, um einem Benutzer die Art der angeschlossenen Telefoneinheit oder einen Fehlercode durch ein farbiges Blinken anzuzeigen. Darüber hinaus kann an dem Leuchtmittel eine Verbindungsstärke mit dem Mobilfunknetz ablesbar sein. Dieses bietet sich insbesondere dann an, wenn die Kommunikationsverbindung nur einen eingeschränkten Betrieb der Telefoneinheit ermöglicht, wie beispielsweise in besonders stark abgeschirmten Räumen. Zusätzlich kann die Kommunikationseinheit ein Anzeigemittel aufweisen. Bei dem Anzeigemittel kann es sich vorteilhafterweise um einen Flüssigkristallbildschirm, insbesondere ein TFT-Display handeln, auf welchem eine gewählte Telefonnummer oder ein Name für einen eingehenden Anruf dargestellt wird. Zusätzlich lassen sich über das Anzeigemittel Informationen darstellen, die auf der Rechnereinheit gespeichert sind oder von dem Mobilfunknetzbetreiber an die Kommunikationseinheit übersandt werden. Darüber hinaus kann in der Rechnereinheit ein Telefonbuch gespeichert sein, dessen Inhalt auf dem Anzeigemittel angezeigt wird.

Bei einer weiteren Ausführungsvariante ist mittels der Telefoneinheit eine Konferenzschaltung über die Kommunikationseinheit auslösbar. Dabei werden mittels der Konferenzschaltung eine Mehrzahl von an unterschiedlichen Orten befindlichen Telefoneinheiten und/oder Kommunikationseinheiten verbunden. Solche Art Konferenzschaltungen bieten sich immer dann an, wenn eine Mehrzahl von Benutzern an einem Telefongespräch teilnehmen sollen.

Die Betreiber von Mobilfunknetzen bieten Benutzern von Mobiltelefonen heutzutage unterschiedlichste Telekommunikationsdienste an. Diese Dienste lassen sich allerdings nicht mit älteren analogen Telefoneinheiten ausführen. Zum Schließen dieser Lücke ist die Kommunikationseinheit erfindungsgemäß derart ausgelegt, dass beliebige - auch analoge - Telefoneinheiten moderne Telekommunikationsdienste verwenden können. Vorzugsweise handelt es sich bei den Telekommunikationsdiensten um eine SMS (Short Message Service), eine MMS (Multimedia Messaging Service), eine EMS (Enhanced Message Service), eine UM (Unified Messaging) und/oder eine LBS (Location Based Services). Dazu können in der Rechnereinheit Emulator-Systeme hinterlegt sein, die die Eingaben der Telefoneinheiten in die Nachrichtenformate der Telekommunikationsdienste umsetzen.

Damit die beschriebenen Telekommunikationsdienste ausgeübt werden können sowie die an die Kommunikationseinheit angeschlossenen Telefoneinheiten bzw. Telefonsysteme fehlerfrei mit dem Mobilfunknetz kommunizieren, hat es sich als vorteilhaft erwiesen, wenn letzteres nach einem 4G, UMTS (Universal Mobile Telecommunications System) und/oder GSM (Global System for Mobile Communications) Mobilfunk-Standard betrieben wird. Insbesondere ein UMTS Mobilfunknetz weist Datenraten auf, die eine Übertragung von multimedialen Diensten ermöglicht. So kann neben der bekannten Audiotelefonie auch eine Videotelefonie, ein Internetzugang, E-Commerce oder TV-on-Demand übertragen werden. Zukünftige 4G Mobilfunk-Standards werden die Möglichkeit der über die erfindungsgemäße Kommunikationseinheit übertragbaren Daten noch weiter steigern, so dass neben den heute bekannten Telefoneinheiten weitere multimediale Geräte anschließbar sind. Insbesondere im Bereich TV-on-Demand und Videotelefonie kann die erfindungsgemäße Kommunikationseinheit in Zukunft dem Benutzer eine preiswerte, stabile und sichere Verbindung mit dem Mobilfunknetz ermöglichen.

Weitere Maßnahmen, Vorteile, Merkmale und Effekte der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig.1: eine Telefoneinheit und einen Telefonanschluss,
- Fig. 2: eine erfindungsgemäße Kommunikationseinheit, an die die Telefoneinheit aus Fig. 1 angeschlossen ist, und
- Fig. 3: die Kommunikationseinheit mit einem daran angeschlossenen Telefonsystem.

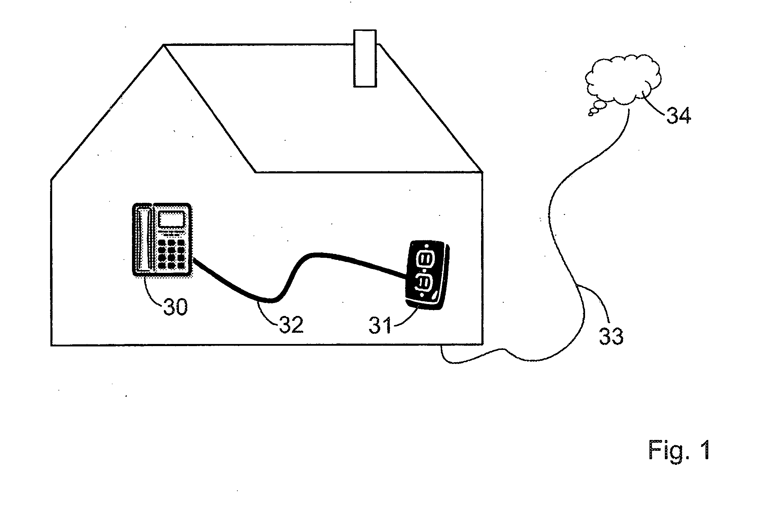

In Fig. 1 ist eine Telefoneinheit 30 dargestellt, die über eine Anschlussleitung 32 mit einem Telefonanschluss 31 verbunden ist. Bei dem Telefonanschluss 31 handelt es sich um eine Buchse, welche über ein Telefonkabel 33 mit einem Telekommunikationsnetz 34 verbunden ist. Wie oben dargelegt, besteht bei dieser Konfiguration der Nachteil, dass die Art und die Anzahl der anschließbaren Telefoneinheiten 30 abhängig ist von der Ausgestaltung des Telefonkabels 33, welches den Telefonanschluss 31 mit dem kabelgebundenen Telekommunikationsnetz 34 verbindet.

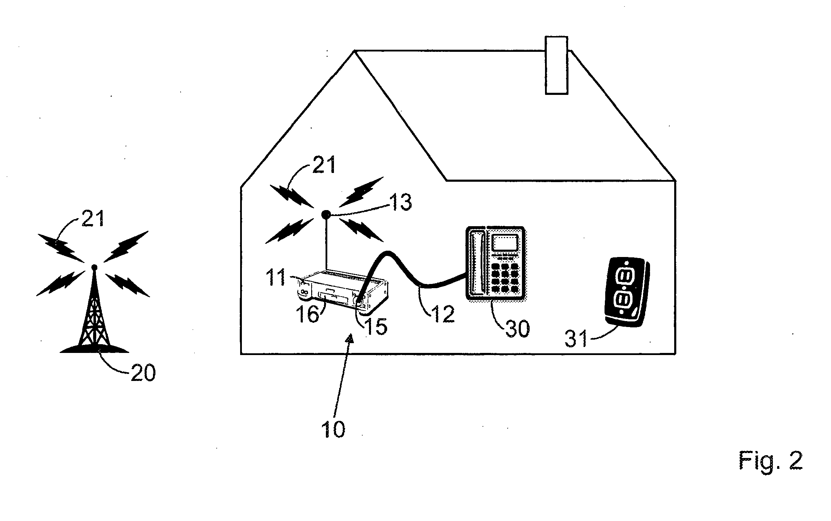

In Fig. 2 ist schematisch die erfindungsgemäße Kommunikationseinheit 10 und ein Mobilfunknetz 20 dargestellt. Damit die Kommunikationseinheit 10 mit dem Mobilfunknetz 20 kommunizieren kann, weist ersterer ein Kommunikationselement 13 auf. Bei diesem Kommunikationselement 13 handelt es sich um eine in konstruktiver Baueinheit ausgeführte Kombination aus Sender und Empfänger, mittels derer die Kommunikationseinheit 10 eine Kommunikationsverbindung 21 mit dem Mobilfunknetz 20 aufbauen kann. Über diese Kommunikationsverbindung 21 ist ein einseitiger oder wechselseitiger Austausch von Daten wie etwa Sprache, Text, Graphiken oder weiteren Informationen möglich.

Das in Fig. 2 nur symbolisch dargestellte Mobilfunknetz 20 umfasst im Wesentlichen ein Kernnetz sowie verschiedene ortsfeste Plattformen, welche die Übertragung der Signale über die sogenannte Luftschnittstelle sicherstellen. Der eingezeichnete Funkturm soll beispielhaft als eine solche Plattformen des Mobilfunknetzes 20, vorzugsweise als eine Sende-/Empfangsstadion (Base Transceiver Station, BTS), verstanden werden. Im Gegensatz zu dem in Fig. 1 gezeigten Telefonanschluss 31 bedarf es keines Telefonkabels 33 um eine Verbindung zwischen der Kommunikationseinheit 10 und dem Mobilfunknetz 20 herzustellen. Vielmehr wird diese Kommunikationsverbindung 21 durch eine Übertragung von Signalen über die Luftschnittstelle aufgebaut.

Erfindungsgemäß ist es vorgesehen, dass die Telefoneinheit 30 mit der Kommunikationseinheit 10 über eine Datentransferanbindung 12 verbunden wird, weshalb die Kommunikationseinheit 10 einen Verbindungsanschluss 15 aufweist. Dieser Verbindungsanschluss 15 kann in seiner Ausgestaltung mit dem Telefonanschluss 31 übereinstimmen, da es in diesem Fall keiner Änderung eines an der Anschlussleitung 32 angebrachten Steckers bedarf. Ein Benutzer muss vielmehr nur die Anschlussleitung 32 aus dem Telefonanschluss 31 ziehen und in den Verbindungsanschluss 15 der Kommunikationseinheit 10 einführen, um eine Datentransferanbindung 12 aufzubauen. Im Anschluss daran kann die Telefoneinheit 30 die Kommunikationsverbindung 21 der Kommunikationseinheit 10 mit dem Mobilfunknetz 20 nutzen.

Zum Aufbau der Kommunikationsverbindung 21 bedarf es einer Einwahlinformation. Bei dieser Einwahlinformation handelt es sich erfindungsgemäß um eine Telefonnummer, also einer einmalig vorkommenden Nummer eines Telefonanschlusses 31. Zu einer an diesem Telefonanschluss 31 angebrachten Telefoneinheit 30 lässt sich eine Kommunikationsverbindung durch Eingabe der Einwahlinformation in eine weitere Telefoneinheit 31 aufbauen. Das Telekommunikationsnetz verbindet mit Hilfe der Einwahlinformation die beiden beteiligten Telefoneinheiten 30, um Sprache oder Bilder zu übermitteln. Bei der erfindungsgemäßen Kommunikationseinheit 10 ist vorgesehen, dass diese Einwahlinformation mittels der Telefoneinheit 30 an die Kommunikationseinheit 10 übersandt wird. Letzterer überträgt dann die Einwahlinformation an das Mobilfunknetz 20, welches die Kommunikationsverbindung 21 zu dem angerufenen Teilnehmer aufbaut. Die Kommunikationseinheit 10 übernimmt somit die Umsetzung und Weiterleitung all jener Informationen und Daten, die in die Telefoneinheit 30 eingegeben werden. Aus diesem Grund können insbesondere schon bestehende Telefoneinheiten 30 mit der Kommunikationseinheit 10 verbunden werden.

Um Systemfunktionen vor Missbrauch zu schützen, weist die Kommunikationseinheit 10 ein Identifizierungselement 11 auf. Das Identifizierungselement 11 beinhaltet einen Angabensatz, der zur Identifizierung der Kommunikationseinheit 10 in dem Mobilfunknetz 20 dient. Um dieses zu ermöglichen, kann der Angabensatz einen Gerätecode und einen Benutzercode enthalten. In GSM-Netzen kann in dem Gerätecode eine eindeutige und gerätespezifische, elektronische Identifizierungsnummer integriert sein, welche sich aus einem Typencode und einer fortlaufenden herstellerabhängigen Fertigungsnummer (IMEI) zusammensetzt. Des Weiteren kann als Benutzercode eine internationale Mobilfunkteilnehmerkennung (IMSI) übersandt werden. Dabei handelt es sich um eine netzinterne Kennung, die der Identifikation des Teilnehmers bei der Vermittlung und Signalisierung eines Anrufes dient. Bei dem Identifizierungselement 11 kann es sich um eine SIM-Karte (Subscriber Identity Module) handeln, auf der neben den genannten Benutzer- und Gerätecode weitere geheime Nummern und Algorithmen gespeichert sind.

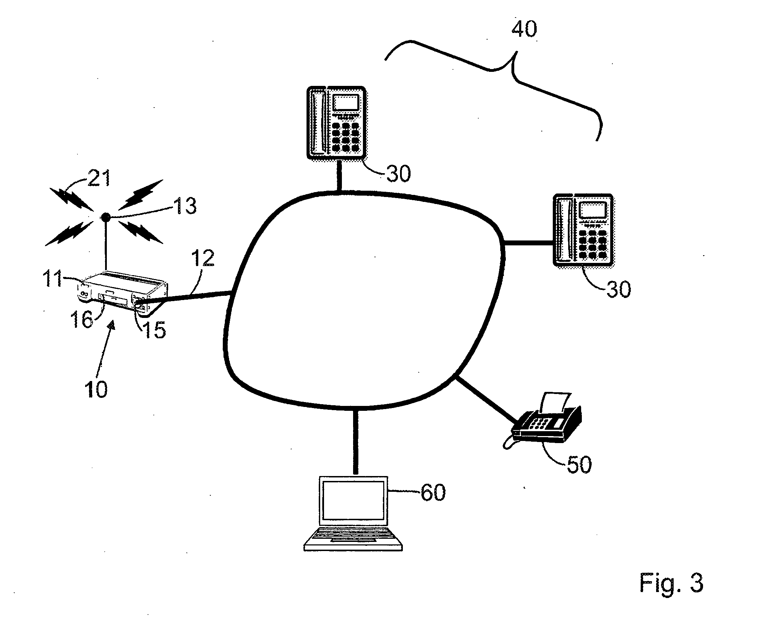

Die erfindungsgemäße Kommunikationseinheit 10 weist den Vorteil auf, dass es sich bei der anschließbaren Telefoneinheit 30 sowohl um einen analogen als auch digitalen Telefonapparate handeln kann. Durch eine entsprechend ausgelegte Systemelektronik erkennt die Kommunikationseinheit 10, ob der angeschlossene Telefonapparat nach einem POTS, PSTN, GSTN und/oder ISDN Telekommunikationsstandard arbeitet. Dieses ist insbesondere dann von Vorteil, wenn ein Benutzer nicht mehr über das kabelgebundene Telekommunikationsnetz 34, sondern über das Mobilfunknetz 20 kommunizieren möchte. In diesem Falle bedarf es nicht der Anschaffung einer neuen Telefoneinheit 30; vielmehr reicht ein Umstecken der Anschlussleitung 32 in die Kommunikationseinheit 10. Ein solcher Wechsel ist erfindungsgemäß nicht nur mit einer einzelnen Telefoneinheit 30, sondern auch mit einem Telefonsystem 40 möglich, was die Fig. 3 verdeutlicht.

In der Fig. 3 ist ein Telefonsystem 40 dargestellt, welches aus zwei Telefoneinheiten 30, einem Faxgerät 50 sowie einem Computer 60 aufgebaut ist. Die genannten Elemente des Telefonsystemes 40 sind in ein schematisch dargestelltes Netz 41 integriert. Dieses Netz 41 weist eine Infrastruktur auf, die es ermöglicht, eingehende bzw. ausgehende Telefonanrufe und/oder weitere Informationen den einzelnen Elementen des Telefonsystemes 40 fehlerfrei zuzuordnen. Um eine schnelle Verbindung eines bestehenden Telefonsystems 40 mit der Kommunikationseinheit 10 zu ermöglichen, kann die Kommunikationseinheit 10 ein Computer-Programm aufweisen, welches die Art und/oder die Anzahl der Telefoneinheiten 30 und/oder Faxgeräte 50 und/oder Computer 60 ermittelt. Zusätzlich kann das Computer-Programm einen Verbindungsdatensatz aufweisen, der sich selbständig auf dem Computer 60 installiert. Im Anschuss daran besteht die Möglichkeit, mittels des Computers 60 über die Kommunikationsverbindung 21 Zugang zum Internet zu erlangen.

Zur Darstellung der Einwahlinformationen kann die erfindungsgemäße Kommunikationseinheit 10 über ein Anzeigemittel 16 verfügen. Bei diesem Anzeigemittel 16 handelt es sich vorzugsweise um einen Flüssigkristallbildschirm oder ein TFT Display. Auf diesem Anzeigemittel 16 können neben den gewählten bzw. eingehenden Einwahlinformationen auch weitere Informationen aus einem Datenspeicher, welche in der Kommunikationseinheit 10 integriert ist, angezeigt werden.

### Bezugszeichenliste

- 10: Kommunikationseinheit
- 11: Identifizierungselement
- 12: Datentransferanbindung
- 13: Kommunikationselement
- 15: Verbindungsanschluss
- 16: Anzeigemittel

- 20: Mobilfunknetz
- 21: Kommunikationsverbindung

- 30: Telefoneinheit
- 31: Telefonanschluss
- 32: Anschlussleitung
- 33: Telefonkabel
- 34: Telekommunikationsnetz

- 40: Telefonsystem
- 41: Netz

- 50: Faxgerät

- 60: Computer

## Patentansprüche

1. Kommunikationseinheit (10) für ein Mobilfunknetz (20),
mit einem Identifizierungselement (11) und einem Kommunikationselement (13), wobei
das Identifizierungselement (11) einen Angabensatz beinhaltet, der zur Identifizierung der Kommunikationseinheit (10) in dem Mobilfunknetz (20) dient,
mittels des Kommunikationselementes (13) eine Kommunikationsverbindung (21) zwischen dem Mobilfunknetz (20) und der Kommunikationseinheit (10) aufbaubar ist,
ein Aufbau der Kommunikationsverbindung (21) über eine Einwahlinformation erfolgt,
die Kommunikationseinheit (10) mit Telefoneinheiten (30) verbindbar ist,
die Telefoneinheit (30) die Kommunikationsverbindung (21) der Kommunikationseinheit (10) mit dem Mobilfunknetz (20) nutzt,
und zum Aufbau der Kommunikationsverbindung (21) die Einwahlinformation mittels der Telefoneinheit (30) an die Kommunikationseinheit (10) übermittelbar ist,
**dadurch gekennzeichnet, dass**
die Kommunikationseinheit (10) eine Rechnereinheit aufweist, die eine Art der mit der Kommunikationseinheit (10) verbundenen Telefoneinheiten (30) detektiert und nach einem Abgleich mit in der Rechnereinheit gespeicherten Informationen der Verbindungsanschluss (15) der Kommunikationseinheit (10) mit der Telefoneinheit (30) durch die Kommunikationseinheit (10) an die Telefoneinheit (30) anpassbar ist, wobei alle zur Anpassung erforderlichen Informationen in der Rechnereinheit hinterlegt sind.

2. Kommunikationseinheit (10) nach Anspruch 1,
**dadurch gekennzeichnet,**
**dass** die Telefoneinheit (30) ein analoger Telefonapparat ist, insbesondere, dass die Telefoneinheit (30) für einen POTS (Plain old telephone service), einen PSTN (Public Switched Telephone Network), einen GSTN (General Switched Telephone Network) und/oder einen ISDN (Integrated Services Digital Network) Telefondienst ausgelegt ist und/oder dass die Telefoneinheit (30) nach einem CT1 (Cordless Telephone), einem CT2 oder einem DECT (Digital Enhanced Cordless Telecommunications) Standard arbeitet.

3. Kommunikationseinheit (10) nach Anspruch 1 oder 2,
**dadurch gekennzeichnet,**
**dass** die Kommunikationseinheit (10) mindestens einen Verbindungsanschluss (15) aufweist und mittels des Verbindungsanschlusses (15) die Kommunikationseinheit (10) mit der Telefoneinheit (30) verbindbar ist, wobei vorzugsweise der Verbindungsanschluss (15) ein TAE (Telekommunikations-Anschluss-Einheit), ein TDO (Telefonsteckdose in Österreich) und/oder ein RJ-XX (Registered Jack) Anschluss ist.

4. Kommunikationseinheit (10) nach Anspruch 3,
**dadurch gekennzeichnet,**
**dass** die Telefoneinheit (30) ein Teil eines Telefonsystems (40) ist und die Kommunikationseinheit (10) über den Verbindungsanschluss (15) mit dem Telefonsystem (40) verbindbar ist.

5. Kommunikationseinheit (10) nach einem der vorangegangenen Ansprüche,
**dadurch gekennzeichnet,**
**dass** das Telefonsystem (40) einen Computer (60) und die Rechnereinheit ein Computer-Programm aufweist, wobei das Computer-Programm einen Verbindungsdatensatz auf dem Computer (60) installiert.

6. Kommunikationseinheit (10) nach einem der vorhergehenden Ansprüche,
**dadurch gekennzeichnet,**
**dass** die Kommunikationseinheit (10) ein Leuchtmittel aufweist und das Leuchtmittel insbesondere eine LED oder eine OLED ist, wobei insbesondere an dem Leuchtmittel eine Verbindungsstärke mit dem Mobilfunknetz (20) ablesbar ist.

7. Kommunikationseinheit (10) nach einem der vorhergehenden Ansprüche,
**dadurch gekennzeichnet,**
**dass** mittels der Telefoneinheit (30) eine Konferenzschaltung über die Kommunikationseinheit (10) auslösbar ist, wobei die Konferenzschaltung eine Mehrzahl von an unterschiedlichen Orten befindlichen Telefoneinheit (30) oder Kommunikationseinheit (10) verbindet.

8. Kommunikationseinheit (10) nach einem der vorhergehenden Ansprüche,
**dadurch gekennzeichnet,**
**dass** von der Telefoneinheit (30) über die Kommunikationseinheit (10) eine SMS (Short Message Service), eine MMS (Multimedia Messaging Service), eine EMS (Enhanced Message Service), eine UM (Unified Messaging) und/oder eine LBS (Location Based Services) absendbar ist.

9. Kommunikationseinheit (10) nach einem der vorhergehenden Ansprüche,
**dadurch gekennzeichnet,**
**dass** das Mobilfunknetz (20) nach einem 4G, UMTS (Universal Mobile Telecommunications System) und/oder GSM (Global System for Mobile Communications) Mobilfunk-Standard betreibbar ist.

10. Kommunikationseinheit (10) nach einem der vorhergehenden Ansprüche,
**dadurch gekennzeichnet,**
**dass** an die Kommunikationseinheit (10) ein Faxgerät (50) anschließbar ist und mittels der Kommunikationseinheit (10) eine Faxnachricht versendbar ist, wobei insbesondere das Faxgerät (50) einen G3 oder G4-Faxstandard aufweist.

## Claims

1. A communication unit (10) for a mobile telephone network (20),
with an identifying element (11) and a communication element (13)
whereby
the identifying element (11) contains a set of data that is used to identify the communication element (10) in a mobile telephone network (20),
by way of the communication element (13) a communication connection can be set up between the mobile telephone network (20) and the communication unit (10),
a communication connection (21) is set up via the dial-in information,
the communication unit (10) can be connected to telephone units (30),
the telephone unit (30) uses the communication connection (21) of the communication unit (10) with the mobile telephone network (20),
and to set up the communication connection (21) the dial-in information can be transmitted via the telephone unit (30) to the communication unit (10),
**characterised in that**
the communication unit (10) has a computer unit which detects a type of the telephone units (30) connected to the communication unit (10) and after reconciliation with the information stored in the computer unit the connection socket (15) of the communication unit (10) with the telephone unit (30) can be adapted to the telephone unit (30) through the communication unit (10), whereby all the information required for adaptation is stored in the computer unit.

2. The communication unit (10) in accordance with claim 1
**characterised in that**
the telephone unit (30) is an analogue telephone set, more particularly that the telephone unit (30) is designed for a POTS (Plain Old Telephone Service), a PSTN (Public Switched Telephone Network), a GSTN (General Switched Telephone Network) and/or an ISDN (Integrated Services Digital Network) telephone service and/or that the telephone unit (30) operations in accordance with a CT1 (Cordless Telephone), CT2 or a DECT (Digital Enhanced Cordless Telecommunications) standard.

3. The communication unit (10) in accordance with claim 1 or 2,
**characterised in that** the communication unit (10) has at least one connection socket
(15) and by way of the connection socket (15) the communication unit (10) can be connected to the telephone unit (10), whereby preferably the connection socket (15) is a TAE (Telecommunications Connection Unit), a TDO (Telephone Socket in Austria) and/or a RJ-XX (Registered Jack) socket.

4. The communication unit (10) in accordance with claim 3
**characterised in that**
the telephone unit (30) is a part of a telephone system (40) and the communication unit (10) can be connected to the telephone system (40) via the connection socket (15).

5. The communication unit (10) in accordance with any one of the preceding claims
**characterised in that**
the telephone system (40) has a computer (60) and the computer unit a computer program, whereby the computer program installs a connection data set on the computer (60) .

6. The communication unit (10) in accordance with any one of the preceding claims
**characterised in that**
the communication unit (10) has a lamp and the lamp is, more particularly, an LED or
OLED, whereby, more particularly, a connection strength with the mobile telephone network (20) can be read of on the lamp.

7. The communication unit (10) in accordance with any one of the preceding claims
**characterised in that**
by means of the telephone unit (30) a conference call can be set up via the communication unit (10), whereby the conference call connects a plurality of telephone units (30) or communications units (10) located at different places.

8. The communication unit (10) in accordance with any one of the preceding claims,
**characterised in that**
an SMS (Short Message Service), an MMS (Multimedia Messaging Service), an EMS (Enhanced Message Service), a UM (Unified Messaging) and/or an LBS (Location Based Services) can be sent from the telephone unit (30) via the communication unit (10).

9. The communication unit (10) in accordance with any one of the preceding claims,
**characterised in that**
the mobile telephone network (20) can be operated in accordance with a 4G, UMTS
(Universal Mobile Telecommunications System) and/or GSM (Global System for Mobile Communications) mobile telephone standard.

10. The communication unit (10) in accordance with any one of the preceding claims
**characterised in that**
a fax machine (50) can be connected to the communication unit (10) and by way of the communication unit (10) a fax message can be sent, whereby, in particular, the fax machine (50) is of a G3 or G4 fax standard.

## Revendications

1. Unité de télécommunication (10) pour un réseau de téléphonie mobile (20) avec un élément d'identification (11) et un élément de communication (13), pour laquelle
- l'élément d'identification (11) contient un ensemble de données qui sert à identifier l'unité de télécommunication (10) dans le réseau de téléphonie mobile (20),
- une liaison de communication (21) entre le réseau de téléphonie mobile (20) et l'unité de télécommunication (10) peut être établie au moyen de l'élément de communication (13)
- un établissement de la liaison de communication (21) a lieu par une information de sélection à l'arrivée,
- l'unité de télécommunication (10) peut être raccordée à des unités téléphoniques (30),
l'unité téléphonique (30) utilise la liaison de communication (21) de l'unité de télécommunication (10) avec le réseau de téléphonie mobile (20),
et l'information de sélection à l'arrivée peut être transmise au moyen de l'unité téléphonique (30) à l'unité de télécommunication (10) pour établir la liaison de communication (21),
**caractérisée en ce que** l'unité de télécommunication (10) présente une unité d'ordinateur qui détecte un type d'unités téléphoniques (30) reliées à l'unité de télécommunication (10) et qu'après un réglage avec les informations mémorisées dans l'unité d'ordinateur, la connexion de liaison (15) de l'unité de télécommunication (10) est adaptable avec l'unité téléphonique (30) par l'unité de télécommunication (10) à l'unité téléphonique (30), toutes les informations nécessaires à l'adaptation étant mémorisées dans l'unité d'ordinateur.

2. Unité de télécommunication (10) selon la revendication 1 **caractérisée en ce que** l'unité téléphonique (30) est un appareil téléphonique analogique, en particulier **en ce que** l'unité téléphonique (30) est conçue pour un service téléphonique existant, un service RTPC (Réseau téléphonique public commuté), un service à RTGC (Réseau téléphonique général avec commutation) et/ou un service à Réseau Numérique à Intégration de Services (RNIS) et/ou **en ce que** l'unité téléphonique (30) fonctionne selon une norme CT1 (téléphone sans cordon), CT2 ou une norme du Système Européen de Télécommunication numérique sans fil (DECT).

3. Unité de télécommunication (10) selon la revendication 1 ou 2 **caractérisée en ce que** l'unité de télécommunication (10) présente au moins une connexion de liaison (15) et **en ce qu'**au moyen de la connexion de liaison (15) l'unité de télécommunication (10) peut être reliée à l'unité téléphonique (30), la connexion de liaison (15) étant de préférence une URT (Unité de raccordement de télécommunication), une prise téléphonique en Autriche et/ou un raccordement RJ-XX (prise terminale déposée).

4. Unité de télécommunication (10) selon la revendication 3 **caractérisée en ce que** l'unité téléphonique (30) est une partie d'un système téléphonique (40) et **en ce que** l'unité de télécommunication (10) peut être reliée par la connexion de liaison (15) au système téléphonique (40) .

5. Unité de télécommunication (10) selon une quelconque des revendications précédentes **caractérisée en ce que** le système téléphonique (40) présente un ordinateur (60) et l'unité d'ordinateur un programme d'ordinateur, le programme d'ordinateur installant un ensemble de données de liaison dans l'ordinateur (60).

6. Unité de télécommunication (10) selon une quelconque des revendications précédentes **caractérisée en ce que** l'unité de télécommunication (10) présente un moyen lumineux et **en ce que** le moyen lumineux est en particulier une DEL (diode électroluminescente) ou une DELO (diode électroluminescente organique), une intensité de liaison avec le réseau de téléphonie mobile (20) étant lisible sur le moyen lumineux.

7. Unité de télécommunication (10) selon une quelconque des revendications précédentes **caractérisée en ce qu'**au moyen de l'unité téléphonique (30) un circuit de conférence peut être déclenché par l'unité de télécommunication (10), le circuit de conférence reliant une pluralité d'unité téléphonique (30) ou unité de télécommunication (10) se trouvant en différents endroits.

8. Unité de télécommunication (10) selon une quelconque des revendications précédentes **caractérisée en ce qu'**un SMS (Service de message court), un MMS (service de messagerie multimédia), un EMS (service de message amélioré), une UM (messagerie unifiée) et/ou un SBL (service basé+ sur la localisation) peuvent être envoyés par l'unité de télécommunication (10) depuis l'unité téléphonique (30).

9. Unité de télécommunication (10) selon une quelconque des revendications précédentes **caractérisée en ce que** le réseau de téléphonie mobile (20) peut être exploité selon une norme de téléphonie mobile 4G, UMTS ( Système de télécommunication mobile universel) et/ou GSM (Système mondial pour télécommunications mobiles).

10. Unité de télécommunication (10) selon une quelconque des revendications précédentes **caractérisée en ce qu'**un télécopieur (50) peut être raccordé à l'unité de télécommunication (10) et une information télécopiée peut être envoyée au moyen de l'unité de télécommunication (10), le télécopieur (50) en particulier présentant une norme de télécopie G3 ou G4.
